# EUROPEAN PATENT SPECIFICATION

(11) **EP 0 917 143 B1**
(45) Date of publication and mention of the grant of the patent: **02.01.2004**
(21) Application number: 98120442.3
(22) Date of filing: 29.10.1998
(51) Int. Cl.: G11B 20/10

(54) **Method and apparatus for controlling the buffering of a data stream**
Verfahren und Vorrichtung zur Datenstrompuffersteuerung
Méthode et appareil de contrôle de mémorisation d'un flux de données

(30) Priority: 11.11.1997 EP 97119672; 20.11.1997 EP 97120351
(43) Date of publication of application: 19.05.1999
(73) Proprietor: DEUTSCHE THOMSON-BRANDT GMBH, 78048 Villingen-Schwenningen (DE)
(72) Inventor: Ostermann, Ralf, 30451 Hannover (DE)
(74) Representative: Hartnack, Wolfgang, Dipl.-Ing.

(56) References cited:
- EP-A- 0 668 700
- EP-A- 0 730 272
- EP-A- 0 789 359
- EP-A- 0 798 722

## Description

The present invention relates to a method and to an apparatus for controlling the buffering of a data stream including one or more types of data sectors.

### Background

A DVD (digital versatile disc) player is a disc based device where the disc rotates at a constant speed. This automatically implies a bitstream delivery at a basically constant bitrate. At the same time the DVD standard uses variable bitrate compression for video and audio signals which is carried out in respective data decoders. This allows superior picture and sound quality over constant bitrate coding.
In order to basically match the variable compression bitrate and the disc read-out bitrate the DVD system can make use of a variable disc read-out bitrate. This can be carried out by still reading the disc data at a constant speed but by interrupting the reading for appropriate time periods.

EP-A-0 798 722 discloses a DVD player wherein fixed-size data sectors containing compressed video or audio or subpicture data code pass via a track buffer, a demultiplexer and corresponding decoder bit buffers to video, audio and subpicture data decoders. The total demultiplexer output bitrate can be different from the track buffer input bitrate. A system controller analyses the type of the data sectors entering the track buffer and controls the demultiplexer correspondingly.

### Invention

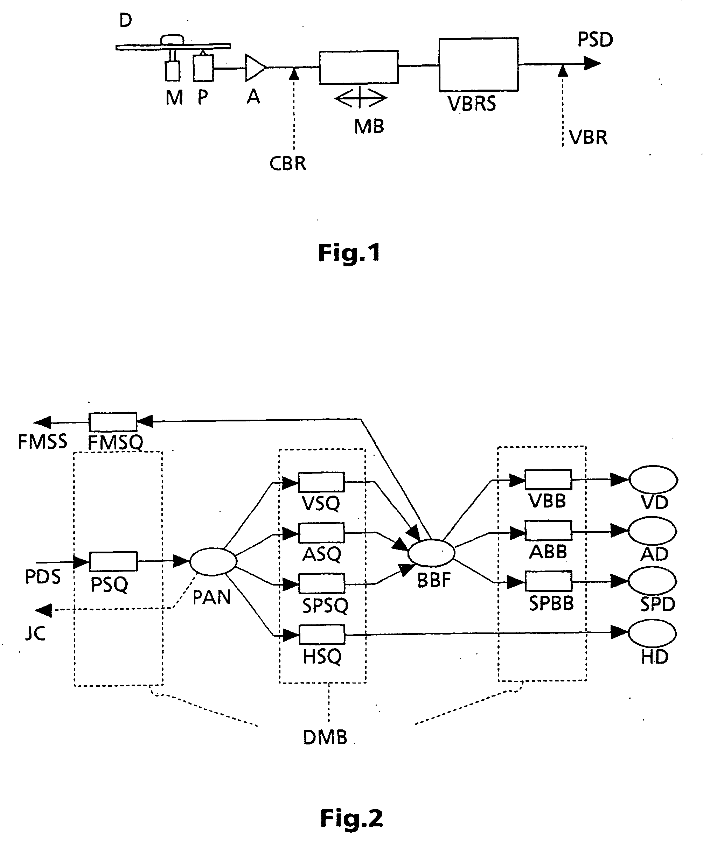

To cope with such requirements an elastic buffer called track buffer or mechanical buffer MB is implemented in a DVD player, see Fig. 1. Whenever the track buffer MB becomes full the read head of the pickup is moved back by the pickup control P by one or two or more tracks on the disc D to reread the data starting from the position where the track buffer became full or before such position. The disc is driven by a motor M. A constant bitrate CBR depending on the disc speed is fed, following amplification A and error correction, to the input of MB, the output signal of which is controlled by a variable bitrate scheduler VBRS which delivers the required data in the required format and at the required time in form of at least one variable bitrate VBR data stream to a data decoder or data decoders, respectively. VBR is defined by the program stream encoder in the studio where the disc has been mastered using corresponding data encoding.
During the time needed to perform the jump-back operation the data decoders or program stream decoders PSD, respectively, will most likely consume data from the track buffer MB. The storage capacity of this track buffer must be big enough to supply all the decoders with the worst case amount of data during the worst case jump-back time. The memory required for such track buffer is one of the most critical and scarce resources in a DVD player. The design, in particular the software design, must use every possibility to optimise this resource.

It is one object of the invention to disclose an improved method for track buffering. This object is achieved by the method disclosed in claim 1.

It is a further object of the invention to disclose an apparatus which utilises the inventive method. This object is achieved by the apparatus disclosed in claim 7.

In order to make maximum use of the available buffer or available buffers and to optimise the overall system throughput the functional equivalent to the track buffer MB is distributed across several stages of buffers which are in particular software controlled.
A first stage can be a pickup buffer which stores the complete pickup data stream.
A second stage can be a parallel set of PES (packetised elementary stream) queue buffers which store e.g. the video, audio, sub-picture and/or highlight data streams as parts of the complete pickup data stream.
A third stage can be a parallel set of bit buffers for e.g. the video, audio, sub-picture and/or highlight data decoders.

This architecture is different from known DVD 'mechanical buffer' architectures which arrange a data stream demultiplexer after the output of the track buffer, wherein the track buffer only serves for data rate equalisation.

The inventive architecture offers the following advantages:
a) The jump information which is located in so-called DSI packs, can be analysed and processed directly when the pack enters the track buffer. This results in faster pickup head jump behaviour.
b) It is not necessary to introduce an extremely tight coupling of a data stream demultiplexer to the variable bitrate byte delivery schedule as it is defined for MPEG-2 program streams. Thus, the storage capacity of the mechanical buffer can at the same time be used to deal with shortages in CPU power.
c) The processing time for demultiplexing can be prolonged significantly and makes software implementation of the demultiplexer easier.
d) Data sectors (a data sector is a specific data packet format for the DVD system) which need not to be decoded, e.g. multi-language audio data in case of single language decoding, can be removed from the data stream before passing subsequent stages of the mechanical buffer.
e) Those parts of the bitbuffers for the compressed data decoders that currently need not to be allocated for data decoding can be used instead for the mechanical buffering.
This specific bitbuffer use does not decrease the required worst case mechanical buffer size, but it supports mechanical buffering in most typical playback scenarios.

In principle, the inventive method is suited for controlling the buffering of a data stream having a current first data rate and including one or more types of data sectors, for the purpose of decoding data of the data stream requiring a current second buffer-out data rate which is normally different from said first data rate, using the following steps:
- intermediate storing of data of the data stream with said first data rate in a first buffer stage;
- analysing data sectors of said data stream and assigning data sectors of specific type to corresponding parts of a subsequent second buffer stage;
- feeding with said second data rate data of respective types of data sectors to corresponding data decoding bitbuffers in a subsequent third buffer stage in order to control the presentation of the decoded data, wherein said first, second, and third buffer stages commonly carry out the buffering between said first and second data rates.

Advantageous additional embodiments of the inventive method are disclosed in the respective dependent claims.

In principle the inventive apparatus controls the buffering of a data stream having a current first data rate and including one or more types of data sectors, for the purpose of decoding data of the data stream requiring a current second buffer-out data rate which is normally different from said first data rate, and includes:
- means for intermediate storing data of the data stream with said first data rate in a first buffer stage;
- means for analysing data sectors of said data stream and assigning data sectors of specific type to corresponding parts of a subsequent second buffer stage;
- means for feeding with said second data rate data of respective types of data sectors to corresponding data decoding bitbuffers in a subsequent third buffer stage in order to control the presentation of the decoded data, wherein said first, second, and third buffer stages commonly carry out the buffering between said first and second data rates.

Advantageous additional embodiments of the inventive apparatus are disclosed in the respective dependent claims.

### Drawings

Embodiments of the invention are described with reference to the accompanying drawings, which show in:
- Fig. 1: conventional mechanical buffer architecture for a DVD player;
- Fig. 2: inventive embodiment of the mechanical buffer.

### Embodiments of the invention

In Fig. 2 the incoming pickup data stream PDS is first stored in a pickup buffer PSQ for PDS data sectors. A subsequent demultiplexer or pack analyser PAN determines and selects the data sectors for e.g. video, audio, sub-picture and/or highlight data and assigns respective data sectors to PES queue buffers, e.g. a video sector buffer VSQ, an audio sector buffer ASQ, a subpicture sector buffer SPSQ and/or a highlight sector buffer HSQ. This assignment can be carried out using respective address pointers or by a respective copy operation. Preferably the demultiplexer or pack analyser PAN determines when the pickup buffer PSQ is full or near to full and sends a corresponding jump command JC to the pickup control.
The data from the PES queue buffers pass through a decoder driver or bitbuffer feeder BBF or a corresponding number of bitbuffer feeders to corresponding data decoder bitbuffers, e.g. a video bitbuffer VBB, an audio bitbuffer ABB and/or a subpicture bitbuffer SPBB. This data assignment can be carried out by a physical copy operation. The decoder driver or bitbuffer feeder BBF can signal via a free memory sector signal buffer FMSQ a corresponding free memory sector signal FMSS to the pickup control. Data from the data decoder bitbuffers are fed to corresponding data decoders, e.g. a video decoder VD, an audio decoder AD and/or a subpicture decoder SPD. The audio decoder may be a MPEG audio and/or an AC3 audio decoder. Highlight data sectors may pass directly from highlight sector buffer HSQ to a highlight decoder HD.
The pickup buffer PSQ, the PES queue buffers, and/or the data decoder bitbuffers can make use of one single memory, corresponding storage areas or ranges of which are assigned to above buffer functions.

Preferably, the DVD demultiplexer is entirely based on software modules. This software is used to parse a stream of DVD sectors containing MPEG-2 program stream packs, to deliver the payload to the various decoders, and to control the presentation of the payload.
The pack analyser request is responsible for the actual demultiplexing operation. It takes DVD sectors containing MPEG-2 program stream packs from pickup buffer PSQ. These program stream packs are parsed to determine one of the PES buffer queues. There is one PES buffer queue for each data decoder. After the pack analyser has determined the correct PES buffer queue the DVD data sector is queued into that queue.
Preferably, this queuing operation does not involve any physical copy operation, it just passes pointers.
The decoder driver or bitbuffer feeder BBF may consist of various data decoder feeders, e.g. a video feeder, an MPEG audio feeder, an AC3 audio feeder, which take the DVD data sectors from their respective PES buffer queue and subsequently copy the data into the decoder bitbuffers. Normally it is necessary to perform a physical copy operation here, because the decoders chips that are available today, e.g. SGS-Thomson STi3520A, require a contiguous bitbuffer memory segment which is entirely controlled by the decoder hardware itself.

However, such additional copy operation can be avoided if an interlinked list being attached to smaller data portions, e.g. data sectors of 2048Byte, is used from which the decoder hardware evaluates respective jump addresses or address pointers for a common memory, as mentioned above. This procedure is described in more detail in another European patent application EP97119673.8 of the applicant and having been filed on the same day.
The data distribution in all stages is variable. Because data is not copied between stages and only address pointers to data blocks are passed, the distribution changes continuously.

In order to avoid any CPU availability problems it is preferable to carry out all processing steps which can be performed up to a current time instance. Therefore, the ideal goal is to have all decoder bitbuffers full and to empty all other queues.

The invention can be used in reproduction devices for all kind of storage media, in particular for optical or magnetical storage media like e.g. optical discs and magnetic tapes, but also for transmission of data to be decoded, if the current or short-term transmission data rate is different from the current or short-term decoding data rate.

## Claims

1. Method for controlling the buffering (MB, DMB) of a data stream (CBR) having a current first data rate and including one or more kinds of DVD-type data sectors containing compressed data code, for the purpose of decoding (VD, AD, SPD, HD) data of the data stream, said decoding requiring a current second buffer-out data rate (VBR) which is normally different from said first data rate, said method including the following steps:
- intermediate storing (PSQ) of data of said data stream with said first data rate in a first buffer stage;
- analysing (PAN) data sectors of said data stream and assigning, from the data sectors received from said first buffer stage, data sectors of specific type that are to be decoded to corresponding parts (VSQ, ASQ, SPSQ, HSQ) of a subsequent second buffer stage,
**characterised by**:
- the assigned data sectors in each one of said parts of said second buffer stage are sections of the complete data stream;
- from said second buffer stage, feeding (BBF) with said second data rate data from respective types of data sectors to corresponding data decoding bit buffers (VBB, ABB, SPBB) in a subsequent third buffer stage, such that contiguous bit buffer memory segments are provided to corresponding types of data decoders (VD, AD, SPD), in order to control the presentation of the decoded data, wherein said first, second, and third buffer stages commonly carry out the buffering (DMB) between said first and second data rates.

2. Method according to claim 1, wherein said first, second, and third buffer stages are located in a common memory.

3. Method according to claim 1 or 2, wherein the assignment in said second buffer stage is carried out using address pointers.

4. Method according to one of claims 1 to 3, wherein the feeding to said third buffer stage is carried out using a data copy operation.

5. Method according to one of claims 1 to 4, wherein said data stream (CBR) is a DVD data stream coming from an optical disc pickup and wherein said types of data sectors include video, audio, subpicture and/or highlight data sectors.

6. Method according to one of claims 1 to 5, wherein the data rates difference buffering for said first, second, and third buffer stages is controlled by software.

7. Apparatus for controlling the buffering (MB, DMB) of a data stream (CBR) having a current first data rate and including one or more kinds of DVD-type data sectors containing compressed data code, for the purpose of decoding (VD, AD, SPD, HD) data of the data stream, said decoding requiring a current second buffer-out data rate (VBR) which is normally different from said first data rate, said apparatus including:
- means (PSQ) for intermediate storing of data of said data stream with said first data rate in a first buffer stage,
**characterised by**:
- means (PAN) for analysing data sectors of said data stream and assigning, from the data sectors received from said first buffer stage, data sectors of specific type that are to be decoded to corresponding parts (VSQ, ASQ, SPSQ, HSQ) of a subsequent second buffer stage, wherein the assigned data sectors in each one of said parts of said second buffer stage are sections of the complete data stream;
- means (BBF) for feeding, from said second buffer stage, with said second data rate data from respective types of data sectors to corresponding data decoding bit buffers (VBB, ABB, SPBB) in a subsequent third buffer stage, such that contiguous bit buffer memory segments are provided to corresponding types of data decoders (VD, AD, SPD), in order to control the presentation of the decoded data, wherein said first, second, and third buffer stages commonly carry out the buffering (DMB) between said first and second data rates.

8. Apparatus according to claim 7, including a common memory in which said first, second, and third buffer stages are located.

9. Apparatus according to claim 7 or 8, wherein said data stream (CBR) is a DVD data stream coming from an optical disc pickup and wherein said types of data sectors include video, audio, subpicture and/or highlight data sectors.

10. Apparatus according to claim 9, wherein said means (PAN) for analysing data sectors determine when the storage capacity of said means (PSQ) for intermediate storing data of the data stream with said first data rate in a first buffer stage is full or near to full and send a jump command (JC) to the pickup control (P).

11. Apparatus according to claim 9 or 10, wherein said means (BBF) for feeding with said second data rate data of respective types of data sectors to corresponding data decoding bit buffers (VBB, ABB, SPBB) determine when free memory is available and send a corresponding free memory sector signal (FMSS) for the pickup control (P).

## Patentansprüche

1. Verfahren zur Steuerung der Pufferung (MB, DMB) eines Datenstroms (CBR), der eine gegenwärtige erste Daten-Rate hat und eine oder mehr Arten von DVD-Typ-Datensektoren einschließt, die einen komprimierten Daten-Strom-Code enthalten, um Daten des Daten-Stroms zu dekodieren (VD, AD, SPD, HD), wobei die Dekodierung eine gegenwärtige zweite Puffer-Ausgangs-Daten-Rate (VBR) erfordert, die sich normalerweise von der ersten Daten-Rate unterscheidet, wobei das Verfahren die folgenden Schritte einschließt:
- Zwischenspeichern (PSQ) von Daten des Daten-Stroms mit der ersten Daten-Rate in einer ersten Pufferstufe;
- Analysieren (PAN) von Datensektoren des Daten-Stroms und Zuordnen aus den von der ersten Pufferstufe empfangenen Datensektoren Datensektoren von bestimmtem Typ, die dekodiert werden sollen, zu entsprechenden Teilen (VSQ, ASQ, SPSQ, HSQ) einer nachfolgenden zweiten Pufferstufe, **dadurch gekennzeichnet, dass**
- die zugeordneten Datensektoren in jedem der Teile der zweiten Pufferstufe Abschnitte des vollständigen Daten-Stroms sind;
- von der zweiten Pufferstufe mit der zweiten Daten-Rate Daten von entsprechenden Typen von Datensektoren entsprechenden Daten dekodierenden Bit-Puffern (VBB, ABB, SPBB) in einer nachfolgenden dritten Pufferstufe zugeführt werden (BBF), so dass aneinandergrenzende Bit-Puffer-Speichersegmente an entsprechende Typen von Daten-Dekodierern (VD, AD, SPD) geliefert werden, um die Darstellung der dekodierten Daten zu steuern, wobei die erste, zweite und dritte Pufferstufe gemeinsam die Pufferung (DMB) zwischen der ersten und zweiten Daten-Rate durchführen.

2. Verfahren nach Anspruch 1, bei dem die erste, zweite und dritte Pufferstufe in einem gemeinsamen Speicher angeordnet sind.

3. Verfahren nach Anspruch 1 oder 2, bei dem die Zuordnung in der zweiten Pufferstufe unter Verwendung von Adressen-Zeigern ausgeführt wird.

4. Verfahren nach einem der Ansprüche 1 bis 3, bei dem die Zuführung zu der dritten Pufferstufe unter Verwendung einer Daten-Kopier-Operation ausgeführt wird.

5. Verfahren nach einem der Ansprüche 1 bis 4, bei dem der Daten-Strom (CBR) ein DVD-Daten-Strom ist, der von einem optischen Platten-Abtaster kommt, und bei dem die Typen von Datensektoren Video-, Audio-, Unterbild- und/oder Highlight-Datensektoren enthalten.

6. Verfahren nach einem der Ansprüche 1 bis 5, bei dem die Daten-Raten-Differenz-Pufferung für die erste, zweite und dritte Pufferstufe durch Software gesteuert wird.

7. Vorrichtung zur Steuerung der Pufferung (MB, DMB) eines Daten-Stroms (CBR), der eine aktuelle erste Daten-Rate hat und eine oder mehrere Typen von DVD-Typ-Datensektoren einschließt, die einen komprimierten Daten-Code enthalten, um Daten des Daten-Stroms zu dekodieren (VD, AD, SPD, HD), wobei die Dekodierung eine aktuelle zweite Puffer-Ausgangs-Daten-Rate (VBR) erfordert, die sich normalerweise von der ersten Daten-Rate unterscheidet, wobei die Vorrichtung umfasst:
- Mittel (PSQ) zum Zwischenspeichern von Daten des Daten-Stroms mit der ersten Daten-Rate in einer ersten Pufferstufe, **gekennzeichnet durch:**
- Mittel (PAN) zum Analysieren von Datensektoren des Daten-Stroms und Zuordnen von den aus der ersten Pufferstufe empfangenen Datensektoren Datensektoren von bestimmtem Typ, die dekodiert werden sollen, zu entsprechenden Teilen (VSQ, ASR, SPSQ, HSR) einer nachfolgenden zweiten Pufferstufe, wobei die zugeordneten Datensektoren in jedem der Teile der zweiten Pufferstufe Abschnitte des vollständigen Daten-Stroms sind;
- Mittel (BBF), um von der zweiten Pufferstufe mit der zweiten Daten-Rate Daten von entsprechenden Typen von Datensektoren entsprechenden Daten-Dekodier-Bit-Puffern (VBB, ABB, SPBB) in einer nachfolgenden dritten Pufferstufe zuzuführen, so dass aneinandergrenzende Bit-Puffer-Speichersegmente an entsprechende Typen von Daten-Dekodierern (VD, AD, SPD) geliefert werden, um die Darstellung der dekodierten Daten zu steuern, wobei die erste, die zweite und die dritte Pufferstufe gemeinsam die Pufferung (DMB) zwischen der ersten und der zweiten Daten-Rate ausführen.

8. Vorrichtung nach Anspruch 7, die einen gemeinsamen Speicher enthält, in dem sich die erste, die zweite und die dritte Pufferstufe befinden.

9. Vorrichtung nach Anspruch 7 oder 8, bei der der Daten-Strom (CBR) ein DVD-Daten-Strom ist, der von einem optischen Platten-Abtaster kommt, und bei der die Typen von Datensektoren Video-, Audio-, Unterbild- und/oder Highlight-Datensektoren enthalten.

10. Vorrichtung nach Anspruch 9, bei der die Mittel (PAN) zum Analysieren von Datensektoren bestimmen, wenn die Speicherkapazität der Mittel (PSQ) für die Zwischenspeicherung von Daten des Daten-Stroms mit der ersten Daten-Rate in einer ersten Pufferstufe voll oder nahezu voll ist und einen Sprungbefehl (JC) zu der Abtaster-Steuerung (P) sendet.

11. Vorrichtung nach Anspruch 9 oder 10, bei der die Mittel (BBF) für die Zuführung von entsprechenden Typen von Datensektoren mit der zweiten Daten-Rate zu entsprechenden Daten-Dekodier-Bit-Puffern (VBB, ABB, SPBB) bestimmen,wenn ein freier Speicher verfügbar ist und ein entsprechendes Signal, das der Speicher frei für ein Sektor-Signal (FMSS) ist, an die Abtaster-Steuerung (P) senden.

## Revendications

1. Procédé de commande de la mise en mémoire tampon (MB, DMB) d'un flot de données (CBR) d'un premier débit courant et comportant une ou plusieurs sorte(s) de secteurs de données de type DVD contenant un code de données comprimées, dans le but de décoder (VD, AD, SPD, HD) des données du flot de données, ledit décodage nécessitant un deuxième débit de données courant à la sortie de la mémoire tampon (VBR), débit normalement différent dudit premier débit de données, ledit procédé comprenant les étapes suivantes :
- enregistrement intermédiaire (PSQ) de données dudit flot de données dudit premier débit dans un premier étage de mémoire tampon ;
- analyse (PAN) de secteurs de données dudit flot de données et affectation, à partir des secteurs de données reçus en provenance dudit premier étage de mémoire tampon, de secteurs de données de type spécifique qui doivent être décodés aux parties correspondantes (VSQ, ASQ, SPSQ, HSQ) d'un deuxième étage de mémoire tampon qui vient à la suite,
**caractérisé par :**
- les secteurs de données affectés à chacune desdites parties dudit deuxième étage de mémoire tampon sont des segments du flot de données complet ;
- à partir dudit deuxième étage de mémoire tampon, la fourniture (BBF) des données dudit deuxième débit provenant de sortes respectives de secteurs de données aux mémoires tampons de bits de décodage de données correspondantes (VBB, ABB, SPBB) dans un troisième étage de mémoire tampon qui vient à la suite, de telle façon que des segments contigus de mémoire tampon de bits soient réservés aux types correspondants de décodeurs de données (VD, AD, SPD), afin de gérer la présentation des données décodées, dans lequel lesdits premier, deuxième et troisième étages de mémoire tampon réalisent en commun la séparation (DMB) entre les données desdits premier et deuxième débits.

2. Procédé selon la revendication 1, dans lequel lesdits premier, deuxième et troisième étages de mémoire tampon se trouvent dans une mémoire commune.

3. Procédé selon la revendication 1 ou 2, dans lequel l'affectation dans ledit deuxième étage de mémoire tampon se fait en utilisant des pointeurs d'adresse.

4. Procédé selon l'une des revendications 1 à 3, dans lequel la fourniture de données audit troisième étage de mémoire tampon se fait à l'aide d'une opération de copie de données.

5. Procédé selon l'une des revendications 1 à 4, dans lequel ledit flot de données (CBR) est un flot de données DVD résultant de la lecture d'un disque optique et dans lequel parmi lesdites sortes de secteurs de données on trouve des secteurs de données vidéo, audio, de sous-image et/ou de mise en évidence.

6. Procédé selon l'une des revendications 1 à 5, dans lequel la fonction de séparation entre les données de débit différent assurée par lesdits premier, deuxième et troisième étages de mémoire tampon est commandée par des moyens logiciels.

7. Appareil de de commande de la mise en mémoire tampon (MB, DMB) d'un flot de données (CBR) d'un premier débit courant et comportant une ou plusieurs sorte(s) de secteurs de données de type DVD contenant un code de données comprimées, dans le but de décoder (VD, AD, SPD, HD) des données du flot de données, ledit décodage nécessitant un deuxième débit de données courant à la sortie de la mémoire tampon (VBR), débit normalement différent dudit premier débit de données, ledit appareil comprenant:
- un moyen d'enregistrement intermédiaire (PSQ) de données dudit flot de données dudit premier débit dans un premier étage de mémoire tampon ;
**caractérisé par :**
- un moyen d'analyse (PAN) de secteurs de données dudit flot de données et affectation, à partir des secteurs de données reçus en provenance dudit premier étage de mémoire tampon, de secteurs de données de type spécifique qui doivent être décodés aux parties correspondantes (VSQ, ASQ, SPSQ, HSQ) d'un deuxième étage de mémoire tampon qui vient à la suite, les secteurs de données affectés à chacune desdites parties dudit deuxième étage de mémoire tampon sont des segments du flot de données complet ;
- un moyen de fourniture (BBF), à partir dudit deuxième étage de mémoire tampon, des données dudit deuxième débit provenant de sortes respectives de secteurs de données aux mémoires tampons de bits de décodage de données correspondantes (VBB, ABB, SPBB) dans un troisième étage de mémoire tampon qui vient à la suite, de telle façon que des segments contigus de mémoire tampon de bits soient réservés aux types correspondants de décodeurs de données (VD, AD, SPD), afin de gérer la présentation des données décodées, dans lequel lesdits premier, deuxième et troisième étages de mémoire tampon réalisent en commun la séparation (DMB) entre les données desdits premier et deuxième débits.

8. Appareil selon la revendication 7, comprenant une mémoire commune dans laquelle se trouvent lesdits premier, deuxième et troisième étages de mémoire tampon.

9. Appareil selon la revendication 7 ou 8, dans lequel ledit flot de données (CBR) est un flot de données DVD résultant de la lecture d'un disque optique et dans lequel parmi lesdites sortes de secteurs de données on trouve des secteurs de données vidéo, audio, de sous-image et/ou de mise en évidence.

10. Appareil selon la revendication 9, dans lequel ledit moyen d'analyse (PAN) de secteurs de données détermine le moment où est saturé ou presque saturé ledit moyen d'enregistrement intermédiaire (PSQ) de données du flot de données dudit premier débit dans un premier étage de mémoire tampon, et envoie une instruction de saut (JC) au dispositif de commande de lecture (P).

11. Appareil selon la revendication 9 ou 10, dans lequel ledit moyen (BBF) de fourniture de données dudit deuxième débit provenant de sortes respectives de secteurs de données aux mémoires tampons de bits de décodage de données correspondantes (VBB, ABB, SPBB) détermine le moment où il existe de la mémoire libre disponible et envoie au dispositif de lecture (P) un signal correspondant de secteur de mémoire libre (FMSS).
